# EUROPÄISCHE PATENTSCHRIFT

(11) **EP 1 219 854 B1**
(45) Veröffentlichungstag und Bekanntmachung des Hinweises auf die Patenterteilung: **09.03.2005**
(21) Anmeldenummer: 01130842.6
(22) Anmeldetag: 27.12.2001
(51) Int. Cl.: F16F 7/09

(54) **Dämpf- und Bremsvorrichtung für Möbelteile**
Damping and braking device for furniture parts
Dispositif d'amortissement et de freinage pour éléments de meubles

(30) Priorität: 02.01.2001 DE 10100014
(43) Veröffentlichungstag der Anmeldung: 03.07.2002
(73) Patentinhaber: Grass GmbH, 6973 Höchst/Vlbg. (AT)
(72) Erfinder: Müller, Wolfgang, 6890 Lustenau (AT)
(74) Vertreter: Riebling, Günter, Dr.

(56) Entgegenhaltungen:
- DE-U- 1 888 930
- DE-U- 29 719 193
- PATENT ABSTRACTS OF JAPAN vol. 009, no. 187 (M-401), 3. August 1985 (1985-08-03) & JP 60 053235 A (SHIYOUWA SEISAKUSHO:KK), 26. März 1985 (1985-03-26)
- PATENT ABSTRACTS OF JAPAN vol. 008, no. 143 (M-306), 4. Juli 1984 (1984-07-04) & JP 59 040041 A (TOYOTA JIDOSHA KK), 5. März 1984 (1984-03-05)

## Beschreibung

Die Erfindung betrifft eine Dämpf- und Bremsvorrichtung für Möbelteile nach dem Oberbegriff des Patentanspruchs 1. Dokument DE-U-297 19 193 zeigt die Merkmale des Oberbegriffs des Patentanspruchs 1.

Bekannte Dämpf- und Bremsvorrichtungen werden insbesondere bei Schubladeneinzügen verwendet, jedoch auch für andere bewegte Möbelteile wie z.B. Klappen, Türen und dergleichen mehr.

Eine erste Ausführungsform von bekannten Brems- und Dämpfungselementen für Möbelteile funktioniert auf dem Prinzip der Kompression mit einer damit verbundenen Querschnittsverengung. Hierbei ist ein Kolben mit dem einen Möbelteil verbunden, während der dem Kolben zugeordnete Zylinder mit dem anderen Möbelteil verbunden ist. Der Kolben wird hierbei in dem Zylinder gegen ein Luftvolumen verschoben, welches aufgrund bestimmter Querschnittsverengungen von dem Kolben nur langsam zu verdrängen ist. Hierdurch kommt der Bremseffekt zustande.

Eine andere Ausführungsform sieht vor, dass das verdrängte Luftvolumen wieder auf die Rückseite des Kolbens eingespeist wird, so dass eine Entlüftung des komprimierten Luftvolumens stattfindet.

Es sind natürlich auch Brems- und Dämpfungselemente nach dem Öldruckprinzip oder auch mit Federn abgestützte Brems- und Dämpfungselemente bekannt. Bei der Verwendung von Öl als Kompressionsmedium besteht der Nachteil, dass bei bestehenden Undichtigkeiten Öl nach aussen dringen kann.

Bei der Verwendung von Luft besteht der Nachteil, dass ein Rückstoss bei der Kompression des Luftvolumens stattfindet, was zu einem Rückschlag während des Bremsvorganges führt.

Beide Systeme haben eine relativ große Eigenreibung und sind darum insbesondere in Verbindung mit einer Schubladeneinzugsvorrichtung nicht geeignet.

Der Erfindung liegt deshalb die Aufgabe zugrunde, ein Brems- und Dämpfungselement der eingangs genannten Art so weiterzubilden, dass während des Brems- und Dämpfungsvorganges keine Schläge und kein Rückstoss entsteht und dass ferner nur geringe Reibwerte bei der Betätigung dieser Vorrichtung entstehen.

Zur Lösung der gestellten Aufgabe ist die Erfindung durch die technische Lehre des Anspruchs 1 gekennzeichnet.

Ein Merkmal einer Ausführungsform ist, dass das Bremselement als elastomere Manschette ausgebildet ist, die unter geringem radialen Spiel in einer Profilnut des Kolbens angeordnet ist und während des Brems- und Dämpfungsvorganges in eine Schrägnut verdrängt wird, welche das elastomere Bremselement radial nach aussen aufweitet und gegen den Innenumfang des Zylindermantels presst. Es kommt hierbei zu dem erwünschten Bremsvorgang.

Vorteil dieser Anordnung ist, dass eine sehr kleine Bauform erreicht werden kann, weil ein geschlossener Kompressionsraum - wie bei den bekannten Dämpfungselementen - nicht erforderlich ist. Ausserdem kann das erfindungsgemässe Brems- und Dämpfungselement für hohe und geringe Geschwindigkeiten oder auch für grosse oder kleine abzubremsende Massen genau ausgelegt werden. Es sind wesentlich geringere Herstellungskosten gegeben, weil entsprechende Entlüfungsanordnungen, Rückführungen und dergleichen entfallen.

Vorteilhaft ist der Zylinder des Brems- und Dämpfungselements mit der unbeweglichen Korpusschiene der Schubladenführung verbunden, während die Kolbenstange mit der beweglichen Schubladenschiene oder der Schubladenzarge verbunden ist oder auch mit dem beweglichen Teil einer Schubladeneinzugsvorrichtung.

Die geringen Herstellungskosten werden auch dadurch erreicht, dass der Zylinder als einfaches Rohr oder Hülse ausgebildet ist, die in Bremsrichtung offen ist. Es entfällt damit ein geschlossener Kompressionsraum, so dass der Zylinder aus einem kostengünstigen Metall oder Kunststoffmaterial hergestellt werden kann. Es ist ausserdem keine besondere Oberflächengüte notwendig.

Der in dem Zylinder längsverschieblich geführte Kolben weist an seiner Stirnseite einen etwa T-förmigen Ansatz auf, hinter dem eine umlaufende Ringnut angeordnet ist, in welcher das Bremselement angeordnet ist. Die umlaufende Ringnut kann auch an einer beliebigen Stelle in der Längserstreckung des Kolbens eingeformt sein.

An diese umlaufende Ringnut schliesst sich eine kegelig ansteigende Schrägnut an, die sich bis in die Nähe des Aussenumfangs des Kolbens oder direkt bis zum Aussenumfang des Kolbens erstreckt.

In einer ersten Ausführungsform der Erfindung endet die Kegelschräge der Schrägnut am Aussendurchmesser des Kolbens, während in einer zweiten Ausführungsform die Kegelschräge durch eine senkrechte Stirnfläche in dem Kolben begrenzt wird, die sich ihrerseits bis zum Aussenumfang des Kolbens erstreckt.

Bei der ersten Ausführungsform wird das Bremselement (z.B. ein O-Ring) unbegrenzt gegen den Zylinder-Innendurchmesser während des Bremsvorganges gepresst. Je nach Kegelwinkel und Geschwindigkeit des Kolbens, sowie der abzudämpfenden Masse wird damit die Dämpfungskraft bestimmt.

Mit Abstimmen des Kegelwinkels in Verbindung mit der Grösse des Bremselements kann ein Quetschen und ein dadurch entstehendes Blockieren des Systems verhindert werden.

Bei der zweiten Ausführungsform wird ein Blockieren der Anordnung dadurch vermieden, dass in Bremsrichtung im Anschluß an die vorher genannte Kegelschräge eine etwa senkrechte Anschlagkante vorgesehen ist, an der sich das Bremselement in Bremsstellung anlegt und dadurch in Richtung auf den Innenumfang des Zylinders nicht weiter als notwendig verformt wird.

Die Lebensdauer der gesamten Anordnung wird erfindungsgemäss dadurch wesentlich verbessert werden, dass alle gleitenden Flächen mit einem hochviskosen Schmierstoff versehen sind.

Das Bremselement sollte vorteilhaft aus einem elastischen Material hergestellt werden. Es kann hierfür ein einfacher O-Ring verwendet werden oder auch - bei der Verwendung eines mehrfachen O-Rings - eine Bremsmanschette.

Die als weitere Ausführungsform beschriebene Bremsmanschette besteht also aus einer Vervielfachung des als ersten Ausführungsbeispiel beschriebenen O-Rings.

In beiden Ausführungsformen kann es auch vorgesehen sein, dass das Bremselement aus einem elastischen Material mit eingeschlossenem Schmierstoff hergestellt wird.

Wird demgemäss ein aus mehreren miteinander werkstoffeinstückig verbundenen O-Ringen ausgebildete Bremsmanschette verwendet, dann werden anstatt einer einzigen Schrägnut am Kolben mehrere hintereinander angeordnete Schrägnuten vorgesehen, zwischen denen jeweils Ringnuten angeordnet sind.

Bei der Verwendung derartiger mehrerer Schrägnuten ist dann ein Blockieren des Systems nicht möglich.

Ein derartiges Brems- und Dämpfungselement - in allen beschriebenen Ausführungsformen - weist eine besonders niedrige Eigenreibung auf. Es hat sich gezeigt, dass wenn die gesamte Anordnung senkrecht aufgestellt wird, dann die Eigenreibung so gering ist, dass der Kolben bewegungsgedämpft aber selbsttätig bedingt durch Eigengewicht im Zylinder verschoben wird. Diese geringe Eigenreibung macht das erfindungsgemässe Dämpf- und Bremsvorrichtung besonders für Einzugsvorrichtungen an Schubladen geeignet.

Derartige Einzugsvorrichtungen setzen voraus, dass die Schublade etwa 5 cm vor Erreichen ihrer endgültigen Schließstellung selbsttätig bedingt durch eine Feder in die Schließstellung gezogen wird. Dieser selbsttätige Einzugsvorgang soll möglichst gedämpft ablaufen, um ein schlagartiges Einfahren der Schublade in die Schließstellung zu vermeiden.

Hier hat sich die Anwendung der erfindungsgemässen Dämpf- und Bremsvorrichtung bewährt, weil wegen der geringen Eigenreibung die zur Erreichung der Einzugskraft notwendige Feder nur gering dimensioniert werden muss. Dadurch kann eine sehr kleine Bauform erreicht werden bei relativ geringen Herstellungskosten.

Im folgenden wird die Erfindung anhand von mehrere Ausführungswege darstellenden Zeichnungen näher erläutert. Hierbei gehen aus den Zeichnungen und ihrer Beschreibung Merkmale und Vorteile der Erfindung hervor.

Es zeigen:
- Figur 1:: Schnitt durch eine Bremsvorrichtung in einer ersten Ausführungsform in nicht gebremster Stellung,
- Figur 2:: die Bremsvorrichtung nach Figur 1 in gebremster Stellung,
- Figur 3:: eine gegenüber Figur 1 abgewandelte Ausführungsform in nicht gebremster Stellung,
- Figur 4:: die Anordnung nach Figur 3 in gebremster Stellung,
- Figuren 5 und 6:: die Anordnung nach Figur 1 und 2 in vergrößerter Ansicht,
- Figuren 7 und 8:: eine gegenüber Figur 1 und 2 abgewandelte Ausführungsform,
- Figuren 9 und 10:: eine gegenüber Figur 3 und 4 abgewandelte Ausführungsform
- Figuren 11 und 12:: eine Bremsvorrichtung mit Bremsmanschette in zwei verschiedenen Zuständen,
- Figuren 13 und 14:: eine gegenüber Figur 11 und 12 abgewandelte Ausführungsform,
- Figuren 15 und 16:: eine vergrößerte Darstellung der Ausführungen nach Figur 11 und 12,
- Figur 17:: eine Einzugsvorrichtung in Draufsicht,
- Figur 18:: Schnitt durch eine Einzugsvorrichtung nach Figur 17.

Zu den nachbeschriebenen Ausführungsbeispielen wird allgemein angemerkt, dass alle Ausführungsformen nicht beschränkt sind auf einen runden Zylinder mit einem dementsprechend rund ausgebildeten Kolben und einem dieser Formgebung angepassten Bremselement 3,23. Es können sämtliche Profilformen von Zylindern und darin längsverschiebbar geführten Kolben verwendet werden. Demgemäss ist es möglich, statt eines runden Zylinders 1 und einem darin verschiebbaren Kolben 2 auch rechteckige, ovale, viereckige oder mehreckige Zylinder und dementsprechend angepasste Kolben 2 zu verwenden.

Lediglich der Einfachheit halber wird in der folgenden Beschreibung davon ausgegangen, dass der hier verwendete Zylinder 1 rundzylindrisch ausgebildet ist, indem ein Kolben 2 verschiebbar in den Pfeilrichtungen 10, 11 geführt ist.

Der Kolben 2 ist in einem Zylinderraum 4 verschiebbar geführt, der zur Stirnseite mit einer Öffnung 5 versehen ist.

Auf diese Weise wird das von dem Kolben 2 in dem Zylinderraum 4 verdrängte Luftvolumen frei durch die Öffnung 5 nach aussen verdrängt.

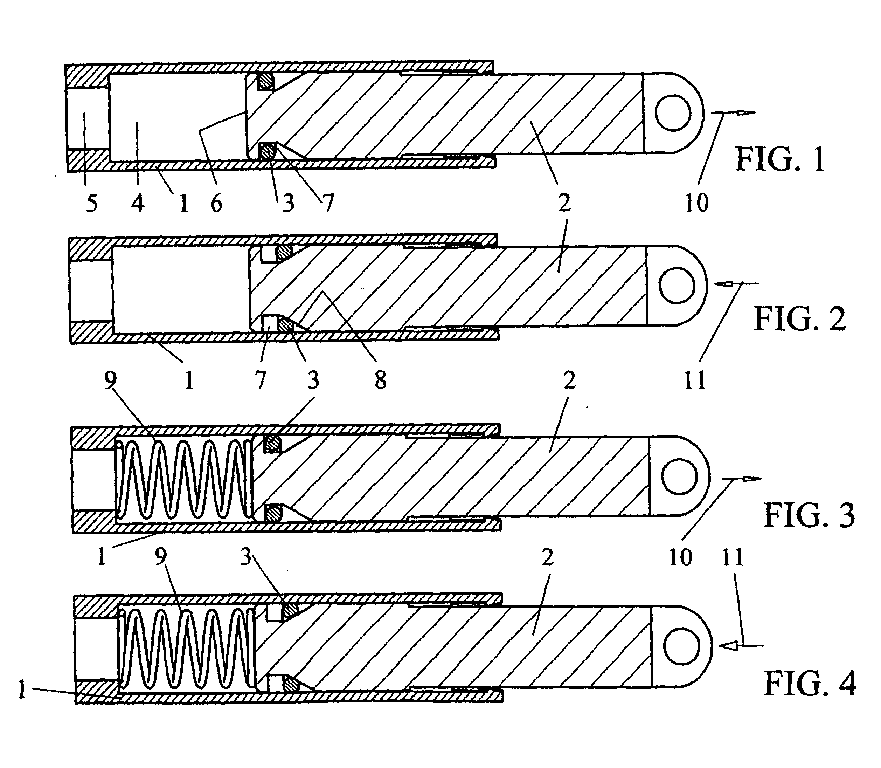

Die gesamte Anordnung verwendet nach den Figuren 1 bis 10 als Bremselement 3 einen O-Ring, der in einer Profilnut 7 am Kolben 2 sitzt.

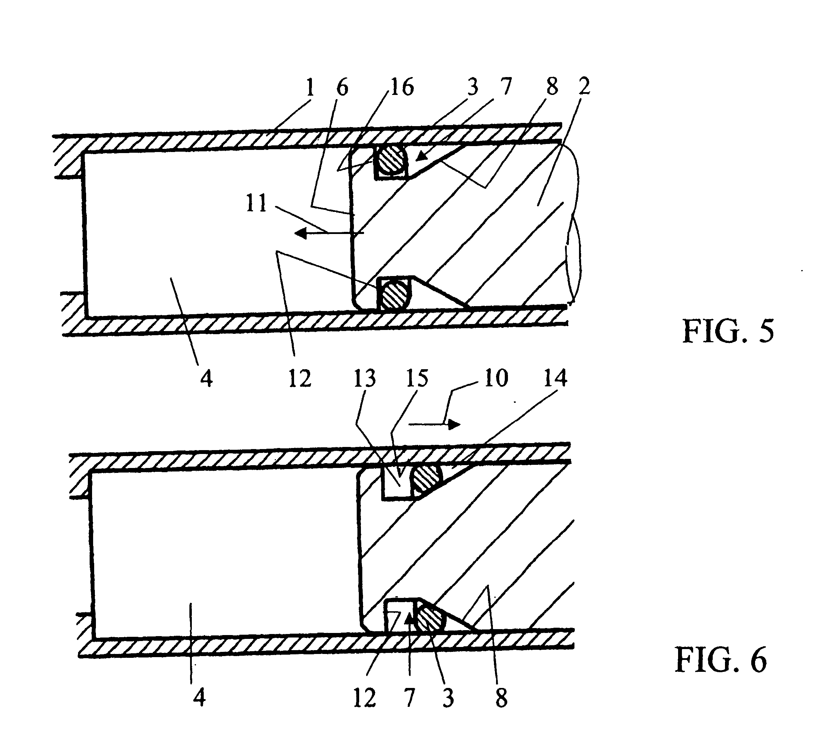

Der Kolben 2 ist nach vorne hin durch einen T-förmigen Ansatz 6 abgeschlossen, der gemäss Figur 6 eine in Bremsrichtung (Pfeilrichtung 11) vorne liegende Stirnkante 12 der Profilnut 7 definiert.

Die Profilnut 7 besteht aus zwei hintereinander angeordnete Nuten, nämlich insgesamt aus einer Ringnut 13 (siehe Figur 5) und einer sich unmittelbar daran anschließenden Schrägnut 14.

Der Einfachheit halber wird das Bremselement 3 als O-Ring dargestellt, obwohl es neben einer rundzylindrischen Form auch eine andere Profilform aufweisen kann.

Das Bremselement 3 ist hierbei mit geringem radialen Spiel 16 in der Ringnut 13 angeordnet, wobei der Durchmesser der Ringnut 13 so gewählt ist, dass das Bremselement 3 noch nicht an dem Innenumfang 15 des Zylinders 2 anliegt.

Das Bremselement 3, 23 sollte einen Aussendurchmesser aufweisen, der gewährleistet, dass das Element mindestens an einer Seite am Innenumfang 15 des Zylinders 1 anliegt, damit bei einer Relativ-Verschiebung von Zylinder 1 zu Kolben 2 das Bremselement 3, 23 aus der Ringnut heraus auf die Kegelschräge verschoben wird.

Erst wenn der Kolben 1 in Pfeilrichtung 11 bewegt wird, gelangt das Bremselement 3 in Pfeilrichtung 10 auf die Schräge 8 der Schrägnut 14 und wird damit gegen den Innenumfang 15 des Zylinders 1 gepresst.

Es handelt sich also um eine zwangsläufige Bremsbewegung, weil das Bremselement 3 automatisch im Bereich dieser Schräge 8 eingeklemmt wird und sich gegen den Innenumfang 15 des Zylinders 1 bremsend abstützt.

Die verwendeten Materialien sollen so gewählt werden, dass eine Gleitreibung stattfindet, d.h. ein Blockieren des Systems soll verhindert werden.

Die Figuren 3 und 4 zeigen, dass der Kolben 2 auch gegen eine Feder 9 verschoben werden kann, wobei die Verschiebung gegen die Feder 9 gemäss Figur 4 in Pfeilrichtung 11 abgedämpft wird.

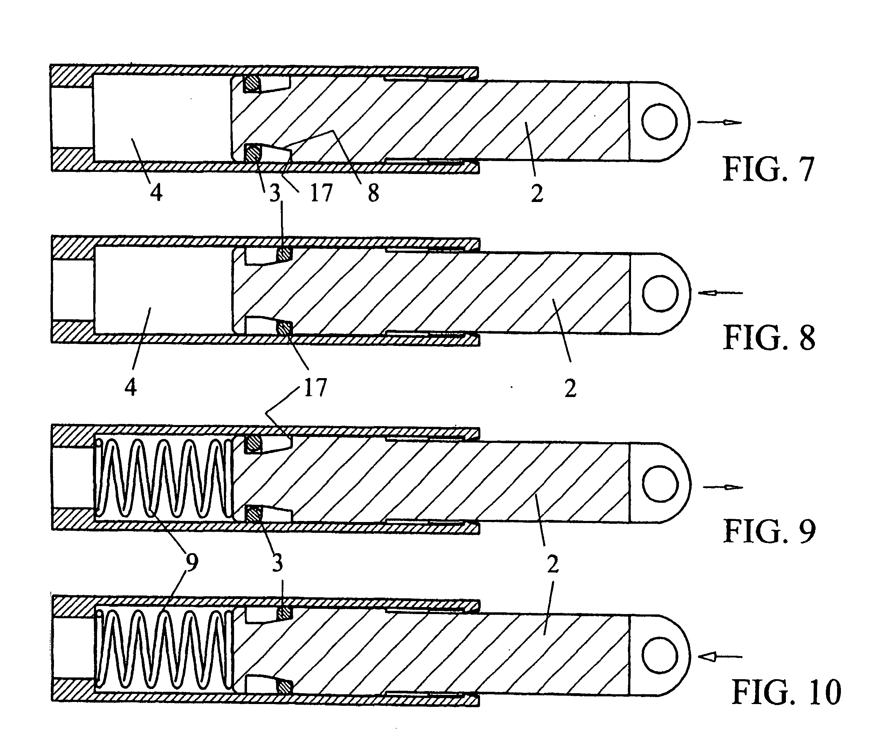

Die Figuren 7 bis 10 zeigen, dass die Schräge 8 nicht notwendigerweise bis zum Aussenumfang des Kolbens 2 verlaufen muss. Hier ist dargestellt, dass die Schräge in eine etwa senkrecht ausgebildete Stirnkante 17 einläuft.

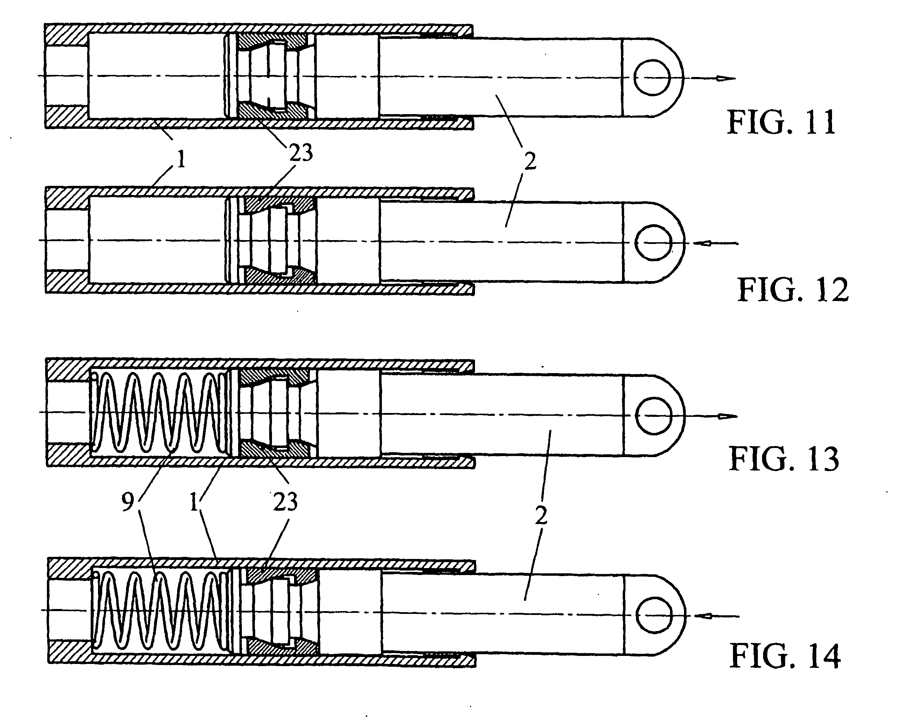

Damit besteht der Vorteil, dass in der Bremsstellung (Figur 8 und 10) das Bremselement 3 an der Stirnkante 17 anschlägt und hierbei nicht stärker als notwendig zusammengepresst wird, so dass eine genau definierte Bremsung stattfindet, ohne dass ein Blockieren zu befürchten ist.

Die Figuren 11 bis 14 zeigen, dass die Anordnung eines als O-Ring ausgebildeten Bremselements 3 auch vervielfacht werden kann, ohne die Idee der Erfindung zu verlassen.

Das dort dargestellte Bremselement 23 besteht aus einer Bremsmanschette, die mit mehreren Schrägen und Ringnuten am Kolben zusammenwirkt.

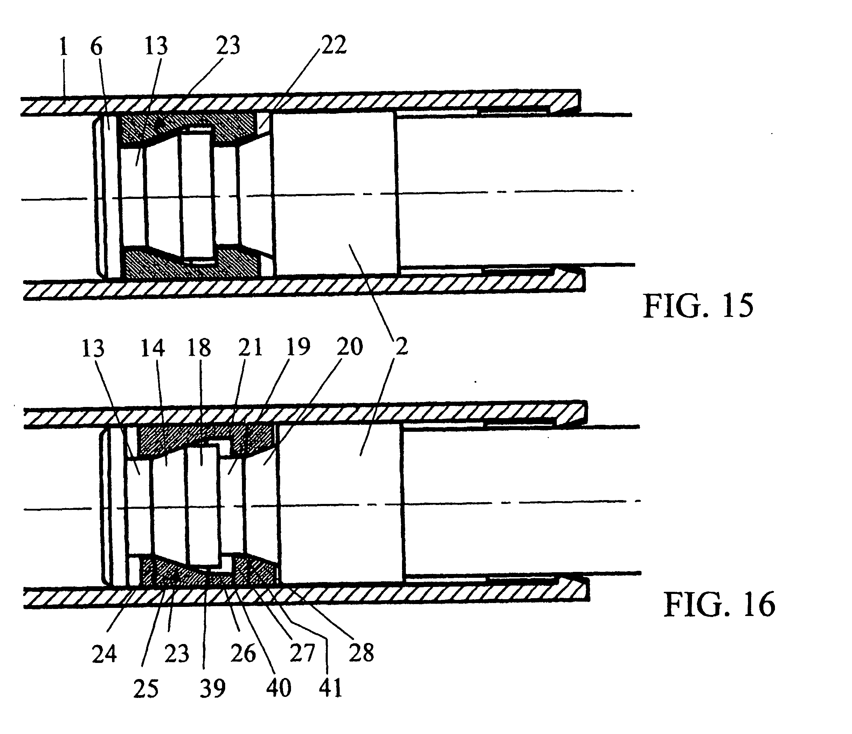

Dies wird nachfolgend anhand der Figuren 15 und 16 näher erläutert.

In Figur 16 sind der besseren Übersichtlichkeit halber die verschiedenen Teile des Bremselements 23 durch vertikale Striche voneinander abgegrenzt, um die Zuordnung der einzelnen Teile zueinander zu erläutern.

Es ist erkennbar, dass an vorderster Stelle das Bremselement 23 ein Ringteil 24 aufweist, welches werkstoffeinstückig mit einem sich daran anschließenden Schrägteil 25 verbunden ist.

Dieses Schrägteil weist eine innen liegende Schräge auf, die sich bis zur Position 39 erstreckt, wo sie wiederum in ein Ringteil 26 größeren Durchmessers einläuft.

Bei Position 40 läuft dieses Ringteil 26 in ein Ringteil 27 kleineren Durchmessers über, welches wieder bei Position 41 in ein Schrägteil 28 übergeht.

Dem so mehrfach mit Ringteilen 24, 26, 27 ausgerüsteten Bremselement 23 sind also die entsprechenden Schrägteile 25, 28 zugeordnet.

Den genannten Teilen entsprechen zugeordnete Flächen auf dem Aussenumfang des Kolbens 2.

Hierbei ist dem vorderen Ringteil 24 eine erste Ringnut 23 mit relativ kleinem Durchmesser zugeordnet.

An diese Ringnut 13 schliesst sich eine konisch nach aussen erweiternde Schrägnut 14 an, die ihrerseits in eine sich an die Schrägnut anschließende Ringnut 18 übergeht, die einen größeren Aussenumfang aufweist, als vergleichsweise die innere Ringnut 13.

An die Ringnut 18 schließt sich wiederum eine Ringnut 19 mit geringerem Durchmesser an, an welche sich wiederum eine daran anschließende Schrägnut 20 anschliesst.

Die mittlere Ringnut 18 grenzt also praktisch zwei unabhängig voneinander arbeitende Teile des Bremselements 23 voneinander ab. Sie wird hierbei in die Freistellung 21 des Bremselements 23 verschoben.

Ein Vergleich der Figur 15 mit der Figur 16 zeigt die Wirkung dieses doppelten Bremselements.

Zunächst presst die Schrägnut 14 das Schrägteil 25 des Bremselements 23 gegen den Innenumfang des Zylinders.

Gleichzeitig wird aber auch das Schrägteil 28 des Bremselements 23 auf der Schrägnut 20 des Kolbens verschoben, so dass auch der Aussenumfang des Schrägteils 28 eine entsprechende Bremswirkung auf den Innenumfang 15 des Zylinders 1 ausübt.

Es ist selbstverständlich, dass auch die dort dargestellte Anordnung des Bremselements 23 aus zwei Bremsteilen (Schrägteil 25 und Schrägteil 28) auch verdreifacht oder vervielfacht werden kann.

Ebenso ist es selbstverständlich möglich, auch die Anordnung eines runden Bremselements 3 zu vervielfachen. Es können dann mehrere Profilnuten 7 hintereinander liegend am Kolben 2 angeordnet sein, wobei in jeder Profilnut 7 jeweils ein Bremselement 3 angeordnet ist.

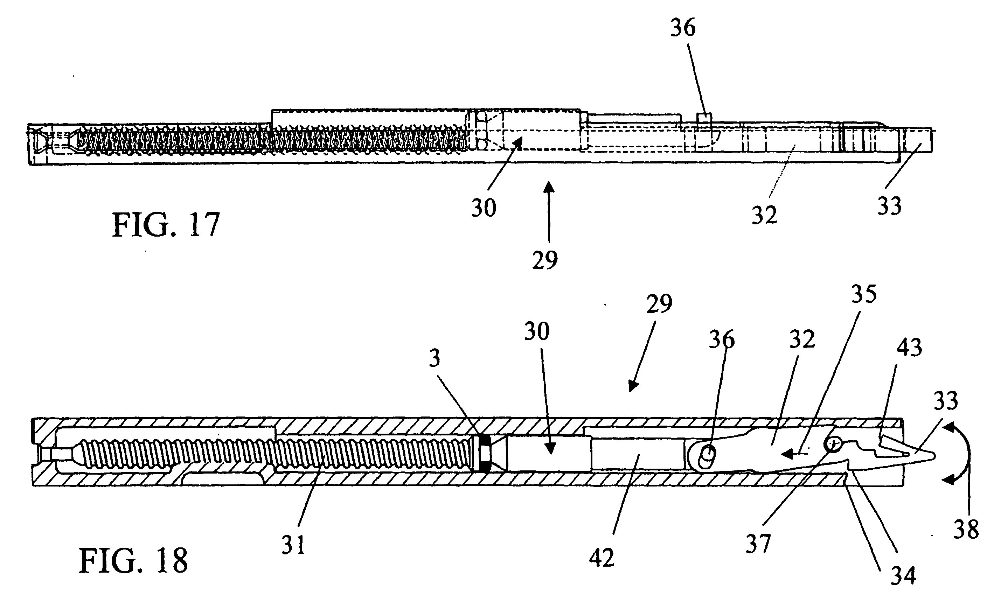

Die Figuren 17 und 18 zeigen die erfindungsgemässe Anordnung in Verbindung mit einer Einzugsvorrichtung 29. Diese besteht im wesentlichen aus einem zylinderförmigen Kunststoffteil, in dem allgemein die Dämpfungsvorrichtung 30 eingebaut ist.

Die Dämpfungsvorrichtung 30 kann hier nach einer der vorher beschriebenen Ausführungsformen 1 bis 16 ausgebildet sein.

Es wird deshalb nur beispielhaft dargestellt, dass diese Dämpfungsvorrichtung 30 mit einem Bremselement 3 arbeitet.

Es ist eine Zugfeder 31 vorhanden, welche die entsprechende Zugkraft auf die Schubladenschiene bzw. die Schubladenzarge ausüben soll.

Hierzu ist die Dämpfungsvorrichtung 30 über ein Verbindungsstück 42 mit einer Einzugsklinke 32 verbunden. Die Einzugsklinke 32 ist schwenkbar auf einem Zapfen 36 in den Pfeilrichtungen 38 gelagert.

Das vordere Ende der Einzugsklinke 32 wird von einem Haken 33 gebildet, der von einem schubladenseitig angeordneten Rastzapfen 37 in seiner Schwenkstellung gesteuert wird.

Die in Figur 18 dargestellte Lage der Einzugsklinke 32 zeigt bereits schon das Einziehen der Schublade unter der Kraft der Zugfeder 31.

Hierbei hat der mit der Schublade verbundene Rastzapfen 37 bereits schon die Einzugsklinke 32 durch Überlaufen des Hakens 33 in Pfeilrichtung 38 nach oben verschwenkt, wodurch die beiden Rastkanten 34 ausser Eingriff gekommen sind.

Die Feder 31 zieht nun die gesamte Anordnung in Pfeilrichtung 35 nach links, wodurch die Schublade in ihre Schließstellung gezogen wird.

Wird die Schublade wieder in ihre Öffnungsstellung bewegt, dann zieht der Rastzapfen 37 die Einzugsklinke 32 in Gegenrichtung zur eingezeichneten Pfeilrichtung 35 nach rechts, wodurch der Rastzapfen 37 an der Schräge 43 des Hakens 33 aufläuft, die gesamte Einzugsklinke damit in Gegenrichtung zur eingezeichneten Pfeilrichtung 35 nach rechts mitzieht, gleichzeitig die Zugfeder 31 spannt und solange die Einzugsklinke 32 bewegt, bis sie in ihre Stellung nach Figur 18 kommt und in Pfeilrichtung 38 nach unten verschwenkt, so dass die Rastkanten 34 wieder ineinander greifen.

Damit kommt der Rastzapfen 37 ausser Eingriff mit dem Haken 33 und die Schublade kann frei in ihrer Öffnungsstellung bewegt werden.

Vorteil der Dämpfungsvorrichtung 30 in Verbindung mit der hier beschriebenen Einzugsvorrichtung 29 ist, dass nur eine relativ schwach dimensionierte Feder 31 verwendet werden muss, weil die Dämpfungsvorrichtung 30 nur eine sehr geringe Eigenreibung aufweist.

Je schneller jedoch die Schublade in Pfeilrichtung 35 bewegt wird, desto schneller wird auch das Bremselement 3 die Kegelschräge am Kolben emporsteigen und desto stärker wird auch die Bremswirkung.

### Zeichnungslegende

- 1: Zylinder
- 2: Kolben
- 3: Bremselement
- 4: Zylinderraum
- 5: Öffnung
- 6: Ansatz
- 7: Profilnut
- 8: Schräge
- 9: Feder
- 10: Pfeilrichtung
- 11: Pfeilrichtung
- 12: Stirnkante
- 13: Ringnut
- 14: Schrägnut
- 15: Innenumfang
- 16: Spiel
- 17: Stirnkante
- 18: Ringnut
- 19: Ringnut
- 20: Schrägnut
- 21: Freistellung
- 22: Freiraum
- 23: Bremselement
- 24: Ringteil
- 25: Schrägteil
- 26: Ringteil
- 27: Ringteil
- 28: Schrägteil
- 29: Einzugsvorrichtung
- 30: Dämpfungsvorrichtung
- 31: Zugfeder
- 32: Einzugsklinke
- 33: Haken
- 34: Rastkante
- 35: Pfeilrichtung
- 36: Zapfen
- 37: Rastzapen
- 38: Pfeilrichtung
- 39: Position
- 40: Position
- 41: Position
- 42: Verbindungsstück
- 43: Schräge

## Patentansprüche

1. Dämpf- und Bremsvorrichtung für Möbelteile mit einem mit dem einen Möbelteil verbindbaren Kolben (2), der längsverschieblich in einem mit dem anderen Möbelteil verbindbaren Zylinder (1) verschiebbar ist, wobei die Verschiebung des Kolbens im Zylinder unter Einwirkung eines Dämpf- und Bremselements verzögert ist, wobei das Bremselement (3, 23) als elastomere Manschette ausgebildet ist, die in einer Profilnut (7) des Kolbens (2) angeordnet ist und die Profilnut (7) aus mindestens einer Ringnut (13) besteht, an die sich entgegen der Verschiebungsrichtung (11) mindestens eine im Querschnitt verengende Schrägnut (8) anschliesst
**dadurch gekennzeichnet,**
**dass** alle gleitenden Flächen (3, 7, 8, 13, 15, 23) mit hochviskosem Schmierstoff versehen sind.

2. Dämpf- und Bremsvorrichtung nach Anspruch 1, **dadurch gekennzeichnet, dass** das Bremselement (3) als O-Ring ausgebildet ist.

3. Dämpf- und Bremsvorrichtung nach Anspruch 1, **dadurch gekennzeichnet, dass** das Bremselement (23) als Manschette ausgebildet ist.

4. Dämpf- und Bremsvorrichtung nach einem der Ansprüche 2 oder 3, **dadurch gekennzeichnet, dass** die Ringnut (13) der Profilnut (7) in Verschiebungsrichtung (11) nach vorne hin durch eine senkrechte Stirnkante (12) begrenzt ist, und dass sich an die andere Seite der Ringnut (13) eine etwa kegelig ausgebildete Schrägnut (8) anschließt, die sich von der einen geringeren Durchmesser aufweisenden Ringnut (13) etwa konisch auf einen größeren Durchmesser erweitert.

5. Dämpf- und Bremsvorrichtung nach Anspruch 4, **dadurch gekennzeichnet, dass** sich die Schrägnut (8) bis an den Aussenumfang des Kolbens (2) hin erstreckt, (Figur 5,6).

6. Dämpf- und Bremsvorrichtung nach Anspruch 4, **dadurch gekennzeichnet, dass** sich die Schrägnut (8) bis zu einer etwa senkrechten Stirnkante (17) des Kolbens (2) erstreckt, (Figuren 7 - 10).

7. Dämpf- und Bremsvorrichtung nach einem der Ansprüche 1 - 6, **dadurch gekennzeichnet, dass** die Verschiebung des Kolbens (2) in einen mindestens einseitig offenen Zylinderraum des Zylinders (1) erfolgt.

8. Dämpf- und Bremsvorrichtung nach Anspruch 7, **dadurch gekennzeichnet, dass** die Verschiebung des Kolbens (2) gegen eine im Zylinderraum (4) angeordnete Feder (9) erfolgt.

9. Dämpf- und Bremsvorrichtung nach einem der Ansprüche 1 - 8, **dadurch gekennzeichnet, dass** die Brems- und Dämpfungsvorrichtung (30) Teil einer federgestützten Einzugsvorrichtung (29) einer Schubladenführung ist.

10. Dämpf- und Bremsvorrichtung nach einem der Ansprüche 1 - 9, **dadurch gekennzeichnet, dass** das Bremselement (3, 23) aus elastischem Material mit darin eingebettetem Schmierstoff besteht.

11. Dämpf- und Bremsvorrichtung nach einem der Ansprüche 1 - 10, **dadurch gekennzeichnet, dass** der Kolben (2) eine durchgehende Profilstange mit an beliebiger Stelle befindlichen Profilnuten (7) ist.

## Claims

1. Damping and braking device for furniture parts comprising a piston (2) which can be connected to the one furniture part and is displaceable, in a longitudinally displaceable manner, in a cylinder (1) which can be connected to the other furniture part, wherein the displacement of the piston in the cylinder is delayed under the action of a damping and braking element, wherein the braking element (3, 23) is designed as an elastomeric sleeve arranged in a profiled groove (7) of the piston (2) and the profiled groove (7) consists of at least one annular groove (13) adjoined by at least one inclined grove (8) narrowing in cross-section counter to the displacement direction (11), **characterised in that** all sliding faces (3, 7, 8, 13, 15, 23) are provided with highly viscous lubricant.

2. Damping and braking device according to claim 1, **characterised in that** the braking element (3) is designed as an O-ring.

3. Damping and braking device according to claim 1, **characterised in that** the braking element (23) is designed as a sleeve.

4. Damping and braking device according to either of claims 2 or 3, **characterised in that** the annular groove (13) of the profiled groove (7) is delimited toward the front in the displacement direction (11) by a perpendicular front edge (12), and **in that** an approximately conical inclined groove (8) adjoins the other side of the annular groove (13) and widens approximately conically to a larger diameter from the annular groove (13) having a smaller diameter.

5. Damping and braking device according to claim 4, **characterised in that** the inclined groove (8) extends up to the outer periphery of the piston (2), (Fig. 5, 6).

6. Damping and braking device according to claim 4, **characterised in that** the inclined groove (8) extends up to an approximately perpendicular front edge (17) of the piston (2), (Figs. 7 to 10).

7. Damping and braking device according to any one of claims 1 to 6, **characterised in that** the piston (2) is displaced into a cylindrical space of the cylinder (1) which is open at least on one side.

8. Damping and braking device according to claim 7, **characterised in that** the piston (2) is displaced against a spring (9) arranged in the cylindrical space (4).

9. Damping and braking device according to any one of claims 1 to 8, **characterised in that** the braking and damping device (30) is part of a spring-assisted draw-in device (29) of a drawer guide.

10. Damping and braking device according to any one of claims 1 to 9, **characterised in that** the braking element (3, 23) consists of elastic material with lubricant embedded therein.

11. Damping and braking device according to any one of claims 1 to 10, **characterised in that** the piston (2) is a continuous profiled rod with profiled grooves (7) located at any point.

## Revendications

1. Dispositif d'amortissement et de freinage pour éléments de meubles, comportant un piston (2) qui est apte à être relié à une partie de meuble et qui est mobile longitudinalement dans un cylindre (1) apte à être relié à l'autre partie de meuble, le déplacement du piston dans le cylindre étant ralenti par l'action d'un élément d'amortissement et de freinage, l'élément de freinage (3, 23) étant conçu comme un manchon en élastomère qui est disposé dans une rainure profilée (7) du piston (2), et la rainure profilée (7) se composant d'au moins une rainure annulaire (13) à laquelle fait suite, dans le sens opposé au sens de déplacement (11), au moins une rainure inclinée (8) à section transversale rétrécie,
**caractérisé en ce que** toutes les surfaces de glissement (3, 7, 8, 13, 15, 23) sont pourvues d'un lubrifiant très visqueux.

2. Dispositif d'amortissement et de freinage selon la revendication 1, **caractérisé en ce que** l'élément de freinage (3) est conçu comme un joint torique.

3. Dispositif d'amortissement et de freinage selon la revendication 1, **caractérisé en ce que** l'élément de freinage (23) est conçu comme un manchon.

4. Dispositif d'amortissement et de freinage selon la revendication 2 ou 3, **caractérisé en ce que** la rainure annulaire (13) de la rainure profilée (7) est délimitée vers l'avant, dans le sens de déplacement (11), par un bord frontal vertical (12) et **en ce que** l'autre côté de la rainure annulaire (13) se prolonge par une rainure inclinée (8) de forme à peu près conique qui va en s'élargissant suivant une forme à peu près conique de la rainure annulaire (13) à faible diamètre jusqu'à un plus grand diamètre.

5. Dispositif d'amortissement et de freinage selon la revendication 4, **caractérisé en ce que** la rainure inclinée (8) s'étend jusqu'à la circonférence extérieure du piston (2) (figures 5, 6).

6. Dispositif d'amortissement et de freinage selon la revendication 4, **caractérisé en ce que** la rainure inclinée (8) s'étend jusqu'à un bord frontal (17) à peu près vertical du piston (2) (figures 7-10).

7. Dispositif d'amortissement et de freinage selon l'une des revendications 1 à 6, **caractérisé en ce que** le déplacement du piston (2) se fait dans un espace cylindrique du cylindre (1) qui est ouvert sur au moins un côté.

8. Dispositif d'amortissement et de freinage selon la revendication 7, **caractérisé en ce que** le déplacement du piston (2) se fait à l'encontre d'un ressort (9) disposé dans l'espace cylindrique (4).

9. Dispositif d'amortissement et de freinage selon l'une des revendications 1 à 8, **caractérisé en ce que** le dispositif de freinage et d'amortissement (30) fait partie d'un dispositif de rentrée à ressort (29) d'un guide de tiroir.

10. Dispositif d'amortissement et de freinage selon l'une des revendications 1 à 9, **caractérisé en ce que** l'élément de freinage (3, 23) se compose d'une matière élastique dans laquelle est enrobé un lubrifiant.

11. Dispositif d'amortissement et de freinage selon l'une des revendications 1 à 10, **caractérisé en ce que** le piston (2) est constitué par une tige profilée continue avec des rainures profilées (7) situées à un endroit quelconque.
